# EUROPÄISCHE PATENTSCHRIFT

(11) **EP 2 671 647 B1**
(45) Veröffentlichungstag und Bekanntmachung des Hinweises auf die Patenterteilung: **17.08.2016**
(21) Anmeldenummer: 12004287.4
(22) Anmeldetag: 05.06.2012
(51) Int. Cl.: B05B 15/12, B01D 45/02, B01D 45/06, B01D 45/08

(54) **Lacknebeltrennvorrichtung**
Atomised paint separation device
Dispositif de séparation de brouillard de peinture

(43) Veröffentlichungstag der Anmeldung: 11.12.2013
(73) Patentinhaber: ABB Schweiz AG, 5400 Baden (CH)
(72) Erfinder: Hermann, Daniel, 8354 St. Anna (AT); Heinrich, Wernfried, 40629 Düsseldorf (DE); Schnaubelt, Marcus, 61169 Friedberg (DE); Vandepitte, Frederik, Dipl.-Ing., 35447 Reiskirchen (DE)
(74) Vertreter: Kock, Ina

(56) Entgegenhaltungen:
- WO-A1-2009/086605
- GB-A- 2 169 526
- US-A- 3 112 352
- US-A- 3 138 087
- US-A- 4 220 078

## Beschreibung

Die Erfindung betrifft eine Lacknebeltrennvorrichtung und eine Lackierkabine mit einer Lacknebeltrennvorrichtung.

Es ist allgemein bekannt, dass beim Lackieren von Werkstücken Lackiervorrichtungen, insbesondere Zerstäuber zum Einsatz kommen. Diese zerstäuben während des Lackiervorgangs ein flüssiges Lackmaterial in eine Vielzahl kleinster Tropfen, beispielsweise in einem Bereich von 5µm bis 50µm Tropfendurchmesser, welche dann zumeist mittels eines vom Zerstäuber ausgehenden Luftstromes in Richtung des zu lackierenden Werkstückes gerichtet werden. Durch die Vermengung der Lacktropfen oder Lackpartikel mit der Luft entsteht beim Betrieb der Lackiervorrichtung ein Lacknebel. Beispiele für derartige Zerstäuber sind Luftzerstäuber oder auch Rotationszerstäuber.

Ein industrieller Lackierprozess erfolgt üblicher Weise in einer Lackierkabine, in welcher geeignete klimatische Bedingungen vorgehalten sind. Lackierkabinen verfügen insbesondere über Vorrichtungen zur Luftreinigung, um nämlich die Kabinenumluft von dem Teil der zerstäubten Lackpartikel, welcher beispielsweise beim Lackierprozess wirkungsgradbedingt nicht das Werkstück erreicht, zu befreien und die so gereinigte Luft wieder mit einer gewünschten Temperatur, beispielsweise 24°C, zur Verfügung zu stellen.

Lacknebel kann aber auch beispielsweise bei einem Farbwechsel oder während eines sogenannten Andrückvorgangs in die Kabinenumluft eingetragen werden. Es ist nämlich bei einem Farbwechsel zu Reinigungszwecken notwendig, Reste des ursprünglichen Lackmaterials aus dem Lackversorgungssystem durch den Zerstäuber nach vorne zu drücken, dasselbe nachfolgend mit einem Reinigungsmittel durchzuführen und anschließend das neue Lackmaterial anzudrücken. Dies geschieht in der Lackierkabine. Hierbei wird das Lackmaterial beziehungsweise Lösemittel nur teilweise zerstäubt und in die Kabinenumluft eingetragen. Bedingt durch Schaltvorgänge oder auch beispielsweise Anlauf- oder Bremsvorgänge bei einem Rotationszerstäuber sind daher auch größere Lack- oder Lösemitteltropfen in dem so erzeugten Lacknebel enthalten.

Zur Reinigung der Kabinenumluft von Lack- oder Lösemittelnebel werden sogenannte Abscheider verwendet, welche letztendlich die Lackpartikel als dann zu entsorgenden Abfall herausfiltern. Es kommen sogenannte Nass- und Trockenabscheider zum Einsatz. Bei Nassabscheidern erfolgt der Eintrag der Lackpartikel zunächst in einen vorzuhaltenden Wasserkreislauf einer Auswaschung, wobei anschließend das Wasser von den Lackpartikeln gereinigt wird. Der anfallende Abfall wird dann aus dem Wasser abgeschieden und als Lackschlamm entsorgt.
Trockenabscheider erweisen sich in vielerlei Hinsicht als vorteilhaft gegenüber Nassabscheidern, insbesondere weil kein Wasserkreislauf vorzuhalten ist. Zudem entfällt das bei Nassabscheidern notwendige Trocknen der durch den Wasserkreislauf angefeuchteten Luft, so dass sich Trockenabscheider auch aus energietechnischer Sicht als vorteilhaft erweisen.

Nachteilig ist jedoch, dass die Filterwirkung von Trockenabscheidern - insbesondere bei Lackmaterialtropfen größeren Durchmessers - weniger effektiv ist, so dass sich bei längerem Betrieb eine erhöhte Verschmutzung der Lackieranlage beziehungsweise der Klimaanlage einstellt. Eine Trockenabscheidung erfolgt nämlich zumeist unter Einsatz eines pulverförmigen Bindemittels, so dass bei einer hohen Partikelbeziehungsweise Tropfengröße aufgrund der dann in Relation geringen Kontaktfläche zwischen Bindemittel und Lackpartikel keine hinreichende Abscheidung erfolgt. Insbesondere also der bei einem Farbwechsel in die Kabinenumluft eingetragene Lacknebel mit teilweise erheblich größeren Lackpartikeln oder -tropfen stellt für eine Trockenabscheidung ein Problem dar.

Das Patentdokument US 3 138 087 A, welches alle Merkmale des Oberbegriffs von Anspruch 1 offenbart, offenbart einen Farbspritzkanal für die Spritzbehandlung großer Werkstücke, z.B. Fahrzeugkarosserien, der in seinem oberen Bereich Einlassöffnungen für die Belüftungsluft und im unteren Bereich mit Waschflüssigkeit zu benetzende geneigte Bodenwandungen sowie daran anschließend einen Farbabscheider mit angeschlossenem Absaugkanal aufweist.

Das Patentdokument US 4 220 078 A offenbart eine Farbspritzanlage mit einem luftdurchlässigen Boden, über den sich im Spritzverfahren zu behandelnde Gegenstände bewegen, ein oder mehrere Wasser enthaltende Behälter unterhalb des Bodens und mindestens eine von dem oder den Behältern abwärts erstreckende Leitung wobei der oder die Behälter und die Leitung oder die Leitungen so angeordnet sind, dass die durch den Boden hindurch strömende und Farbe enthaltende Luft sich mit Wasser aus dem oder den Behältern mischt und das sich daraus ergebende Gemisch durch die Leitung oder die Leitungen hindurchströmt.

Ausgehend von diesem Stand der Technik ist es Aufgabe der Erfindung eine Vorrichtung bereitzustellen, mit welcher der bei einem Farbwechsel beziehungsweise Andrücken eines Zerstäubers entstehende Lacknebel zumindest teilweise von Lackpartikeln befreit werden kann.

Diese Aufgabe wird gelöst durch eine erfindungsgemäße Lacknebeltrennvorrichtung. Diese ist gekennzeichnet durch
- ein konisches Rohr,
- einen Sammeltrichter mit Trichtereinlass und Trichterhals, in welchen das konische Rohr mit seiner größeren Seite hineinragt, wobei der Trichterhals dafür vorgesehen ist, mit einem Sammelbehälter für Lack verbunden zu werden,
- eine Sammelhaube, welche gegenüber dem Trichtereinlass angeordnet ist, und welche eine Lacknebeleinlassöffnung aufweist, in welche das konische Rohr mit seiner kleineren Seite mündet,
- wobei zwischen Einlassöffnung des Sammeltrichters und Sammelhaube ein Austrittsspalt vorgesehen ist.

Die Grundidee der Erfindung besteht darin, einen Zerstäuber während des Lackwechselvorgangs beziehungsweise während des Andrückens von neuem Lackmaterial über einer Lacktrennvorrichtung zu positionieren, wobei der dabei entstehende Lacknebel in das konische Rohr gerichtet ist. Dieses weitet sich von seiner Einlassöffnung her auf, so dass die Geschwindigkeit des Gasanteils des Lacknebels sich zum Ende des konischen Rohres hin mit dessen steigendem Querschnitt reduziert. Die Lackpartikel reduzieren ihre Geschwindigkeit jedoch aufgrund ihrer höheren Masseträgheit nicht oder zumindest weniger, so dass am unteren Ende des konischen Rohres ein Lacknebel mit einer verringerten Geschwindigkeit des Gasanteils und mit einer im Verhältnis dazu erhöhten Geschwindigkeit der darin enthaltenen Lackpartikel oder Lacktropfen gebildet ist. Je größer die Lacktropfen sind, desto höher ist deren Geschwindigkeitsdifferenz zu dem umgebenden Gas.

Somit treffen die Lackpartikel auf einer eher gradlinigen Flugbahn vorzugsweise in den Sammeltrichter, in welchen das konische Rohr gerichtet ist, wohingegen das Gas in Richtung des geringsten Strömungswiderstandes, nämlich in Richtung der Sammelhaube, umgelenkt wird. Auf diese Weise ist eine Trennung von Lackpartikeln beziehungsweise Lacktropfen und Gas bewirkt, welche für eine Trennung der für eine Trockenauswaschung problematischen Lacktropfen größeren Durchmessers besonders wichtig ist. Die separierten Flüssiganteile des Lackmaterials treten dann am Trichterhals aus und werden einem Sammelgefäß zugeführt.

Gemäß einer weiteren Ausgestaltungsform der erfindungsgemäßen Lacknebeltrennvorrichtung weist der Sammetrichter an seinem einlaßseitigen Ende eine rohrähnlich verlängerte Form auf. Bei einer typischerweise senkrechten Ausrichtung des Sammeltrichters führt dies nämlich zu einem verlängerten Strömungsweg des umgelenkten Gasstroms, welcher zwischen der Außenwandung des konischen Rohres und der Innenwandung des Sammeltrichters nach oben strömt. Hierdurch wird in vorteilhafter Weise ein weiteres Trennen der mit dem Luftstrom mitgerissenen kleineren Lackpartikel begünstigt, welche sich dann zumindest teilweise schwerkraftbedingt auf dem Boden des Sammeltrichters absetzen und dann am Ausfluss des Trichters als Lackabfall austreten und in ein entsprechendes Sammelgefäß geleitet werden.

Gemäß einer weiteren Variante der erfindungsgemäßen Lacknebeltrennvorrichtung ist der Sammeltrichter längs seiner axialen Erstreckung von einer zylinderähnlichen Wandung umgeben, welche an ihrem einem Ende mit der Schutzhaube verbunden ist, wobei in radialer Richtung zwischen Trichtereinlass und zylinderähnlicher Wandung ein Durchlassspalt gebildet ist. Damit wird der nach oben gerichtete umgelenkte Gasstrom abermals umgelenkt und ist nunmehr wieder nach unten gerichtet. In vorteilhafter Weise wird hierdurch vermieden, dass der Gasstrom, welcher immer noch einen Restanteil kleinster Lackpartikel aufweisen kann, in die Lackierkabine gerichtet ist, wo er beispielsweise zu einer Verschmutzung von Betriebsmitteln oder von zu lackierenden Objekten führen könnte.

Entsprechend einer weiteren Ausgestaltungsvariante der erfindungsgemäßen Lacknebeltrennvorrichtung ist über der Einlassöffnung ein ringähnliches Verengungselement angeordnet. Dieses ist insbesondere dafür vorgesehen, die Einlassöffnung an den Außenquerschnitt eines jeweils zugeordneten Zerstäubers beziehungsweise an die Geometrie von dessen Sprühkegel anzupassen. Bei einem Farbwechsel- beziehungsweise Andrückvorgang ist der Zerstäuber mit seiner Lackabgabeseite beispielsweise wenige Millimeter über der Einlassöffnung zu positionieren, so dass der von dem Zerstäuber ausgehende Sprühkegel direkt und komplett in die Einlassöffnung gerichtet ist.

Einer weiteren Erfindungsvariante folgend liegt der Neigungswinkel des konischen Rohres im Bereich von 10° bis 50°, so dass sich daraus ein Öffnungswinkel im Bereich von 20° bis 100° ergibt. Wie zuvor erläutert ist Geschwindigkeitsreduktion des Gases im konischen Rohr ein wesentlicher Bestandteil der erfindungsgemäßen Lacknebeltrennfunktionalität. Diese wird durch eine entsprechende Aufweitung des Rohres erreicht. Eine typische Länge eines konischen Rohres liegt hierbei beispielsweise in einem Bereich von 40cm bis 80cm, wobei der Durchmesser der Einlassöffnung beispielsweise 10 - 15cm beträgt.

Gemäß einer besonders bevorzugten Ausgestaltungsform der erfindungsgemäßen Lacknebeltrennvorrichtung ist diese zumindest teilweise aus Edelstahl gefertigt. Edelstahl erweist sich als besonders resistent gegen Lacke und Reinigungsmittel und ist auch besonders einfach zu reinigen.

Die erfindungsgemäße Aufgabe wird auch gelöst durch eine Lackierkabine, umfassend wenigstens eine Lackiervorrichtung und eine Trockenabscheidungsvorrichtung, wobei diese weiterhin wenigstens eine erfindungsgemäße Lacknebeltrennvorrichtung umfasst. Durch den Einsatz der Lacknebeltrennvorrichtung wird insbesondere beim Farbwechsel beziehungsweise beim Andrücken eines neuen Lackmaterials ein Eintrag von Lack- oder Lösemittelpartikeln oder Tröpfchen größeren Durchmessers in den Lufthaushalt der Lackierkabine vermieden. Dadurch wird der effektive Einsatz einer Trockenabscheidung ermöglicht, durch welchen die zuvor genannten Vorteile erschlossen werden, beispielsweise eine erhöhte Energieeffizienz gegenüber einer Nassabscheidung.

Entsprechend einer weiteren Ausgestaltungsform der Lackierkabine ist ein Lackierroboter dafür vorgesehen, die wenigstens eine Lackiervorrichtung zu tragen. Lackierroboter, beispielsweise Knickarmroboter mit sechs Bewegungsfreiheitsgraden, sind dafür sowohl geeignet, einen Zerstäuber in einer reproduzierbaren Bewegung über ein zu lackierendes Werkstück zu führen als auch in der Lage, einen Zerstäuber während eines Farbwechsels derart über eine erfindungsgemäße Lacknebeltrennvorrichtung zu halten, dass der entstehende Lack- beziehungsweise Lösemittelnebel in die Einlassöffnung gerichtet ist. Vorzugsweise ist die Lacknebeltrennvorrichtung in den Kabinenboden beziehungsweise den Kabinenrost eingelassen.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: eine exemplarische erste Lacknebeltrennvorrichtung,
- Fig. 2: eine exemplarische zweite Lacknebeltrennvorrichtung sowie
- Fig. 3: eine exemplarische Lackierkabine.

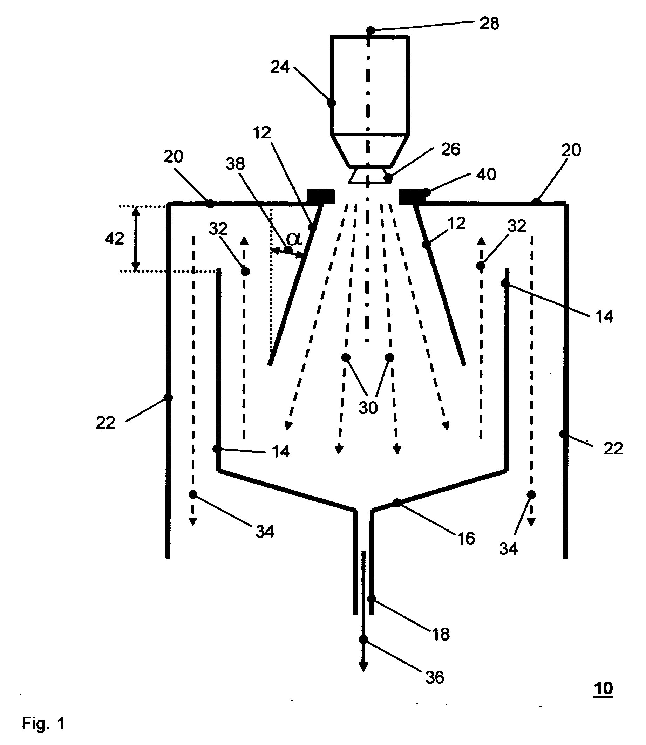

Fig. 1 zeigt eine exemplarische erste Lacknebeltrennvorrichtung 10 in einer seitlichen Querschnittsansicht. Ein längs einer Drehachse 28 ausgerichteter Zerstäuber 24 ist oberhalb der Einlassöffnung der Lacknebeltrennvorrichtung positioniert um dort einen Farbwechsel durchzuführen. Während des Farbwechsels werden zunächst Lackmaterial des vorherigen Farbtons, Lösemittel und anschließend Lackmaterial des neuen Farbtons durch den Zerstäuber gedrückt und durch die sich drehende Zerstäuberglocke 26 in kleinere Lacktropfen zerstäubt. Unmittelbar hinter der Glockenkante ist als Teil des Zerstäubers 28 ein Lenkluftring vorgesehen, aus welchem durch eine Vielzahl längs einer Kreisbahn angeordneter Bohrungen ein kegelförmig nach unten gerichteter Luftstrom geblasen wird. Zusammen mit den Lacktropfen beziehungsweise Lackpartikeln, welche an der Glockenkante der Zerstäuberglocke durch deren Rotation entstehen, ist ein Lacknebel gebildet, dessen kegelähnliche Strömung durch die gestrichelten Linien mit der Bezugsziffer 30 angedeutet sind. Durch die beim Farbwechsel notwendigen Schaltvorgänge beispielsweise des Lackstromes oder der Drehzahl der Zerstäuberglocke enthält das Tropfenspektrum des Lacknebels auch größere Lacktropfen, welche beim Einsatz einer Trockenabscheidung zur Luftreinigung nicht hinreichend herausgefiltert werden können beziehungsweise die zu einem deutlich erhöhten Wartungszyklus der Lackieranlage führen.

Die kegelähnliche Lacknebelströmung 30 ist durch die Lacknebeleinlassöffnung der Lacknebeltrennvorrichtung in deren Inneres gerichtet. Um die Lacknebeleinlassöffnung auf den Zerstäuber 26 beziehungsweise dessen Sprühkegelgeometrie anzupassen ist ein ringartiges Verengungselement 40 vorgesehen, welches auch einem Rückschlag des Lacknebels nach oben vorbeugt. Die Einlassöffnung ist durch die kleinere Öffnung eines längs der Drehachse 28 angeordneten konischen Rohres 12 gebildet, welches mit seiner größeren Öffnung nach unten gerichtet ist und in einen Sammeltrichter 16 hineinragt, welcher ebenfalls längs der Drehachse 28 ausgerichtet ist. In seinem unteren Bereich geht der Sammeltrichter 16 in einen Trichterhals 18 über, welcher als Ausflussöffnung für eine Flüssigkeit beziehungsweise abgetrenntes flüssiges Lackmaterial vorgesehen ist, wie mit dem Pfeil mit der Bezugsziffer 36 angedeutet.

Durch die konische Aufweitung des konischen Rohres, welche durch einen Neigungswinkel 38 gekennzeichnet ist, nimmt die Strömungsgeschwindigkeit des Gasanteils im Lacknebel im konischen Rohr 12 nach unten hin ab. Im unteren Sammeltrichterbereich wird der Lacknebel entsprechend dem Weg des geringsten Strömungswiderstandes nach oben umgelenkt, wie mit den Pfeilen mit der Bezugsziffer 32 angedeutet. Die im Lacknebel enthaltenen Lacktropfen oder Lackpartikel sind abhängig von ihrer Größe aber nicht so stark in ihrer Bahngeschwindigkeit abgebremst wie der gasförmige Anteil des Lacknebels und bewegen sich somit auf einer eher gradlinigen Flugbahn in Richtung des Bodens des Sammeltrichters 16, wo sie dann abgeschieden werden und sich dann in Richtung des Trichterhalses bewegen, von wo sie dann einem nicht gezeigten Sammelbehälter zugeführt werden. Durch die erfindungsgemäße Reduktion der Gasgeschwindigkeit sind zu hohe Turbulenzen in vorteilhafter Weise vermieden, welche ein Abscheiden der Lacktropfen in negativer Weise beeinflussen könnten oder welche auch zu einem Rückschlag des Lacknebels führen könnten.

In seinem oberen Bereich weist der Sammeltrichter 16 eine rohrähnlich verlängerte Form 14 auf. Diese dient dazu den Strömungsweg 32 des Lacknebels nach oben hin zu verlängern und so eine weitere schwerkraftsbedingte Abscheidung von Lackpartikeln zu begünstigen. Weiterhin wird der Strömungsquerschnitt für den nunmehr nach oben gerichteten Gas- oder Lacknebelstrom 32 nach oben hin weiter vergrößert, da das konische Rohr 12 dann außenwändig umströmt wird. Hierdurch sinkt die Strömungsgeschwindigkeit des Gasanteils abermals und ein Abscheiden von Lackpartikeln ist abermals begünstigt.

Im oberen Bereich der Lacknebeltrennvorrichtung erfolgt durch eine Sammelhaube 20 abermals eine Umlenkung des Gasstromes nach unten, wobei zwischen der Oberkante des Sammeltrichters und der quer dazu angeordneten Sammelhaube ein Austrittsspalt 42 vorgesehen ist, der wenigstens einen so großen Querschnitt aufweist, dass eine Verengung des Strömungsquerschnittes für den austretenden Gasstrom vermieden ist. Der Sammeltrichter ist von einer zylindrischen Wandung 22 umgeben, wobei zwischen äußerer Sammelzylinderwandung und innerer zylindrischer Wandung ein Strömungskanal gebildet ist. Durch die abermalige Umlenkung ist der Gasstrom nunmehr wieder nach unten gelenkt wie mit den Pfeilen mit der Bezugsziffer 34 angedeutet ist. Hierdurch ist in vorteilhafter Weise vermieden, dass der immer noch kleinere Lackpartikel enthaltende Gas- beziehungsweise Lacknebelstrom nicht in die Lackierkabine gerichtet ist und dort gegebenenfalls Betriebsmittel oder zu lackierende Werkstücke verschmutzt.

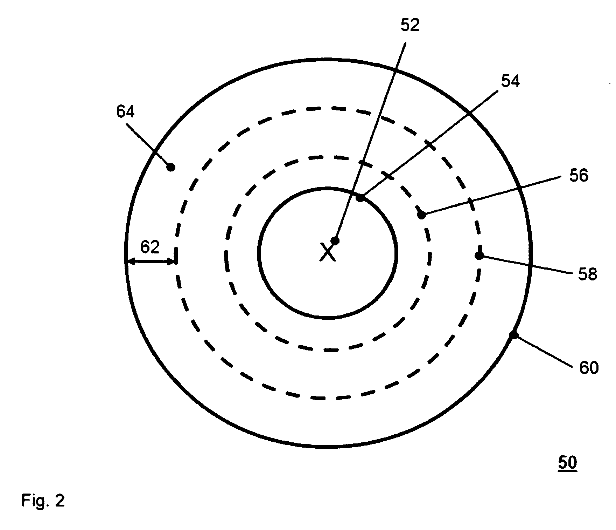

Fig. 2 zeigt eine exemplarische zweite Lacknebeltrennvorrichtung 50 in einer Draufsicht. Längs einer virtuellen Drehachse 52 radialsymmetrisch darum angeordnet sind ein konisches Rohr, welches mit seiner kleineren Öffnung 54 in eine Sammelhaube 64 mündet und mit seiner größeren Öffnung 56 in einen Sammeltrichter 58 hineinragt. Der Sammeltrichter 68 ist radial von einer zylinderähnlichen Wandung umgeben, wobei zwischen Oberkante des Sammeltrichters 58 und zylinderähnlicher Wandung in radialer Richtung ein Durchlassspalt 62 gebildet ist.

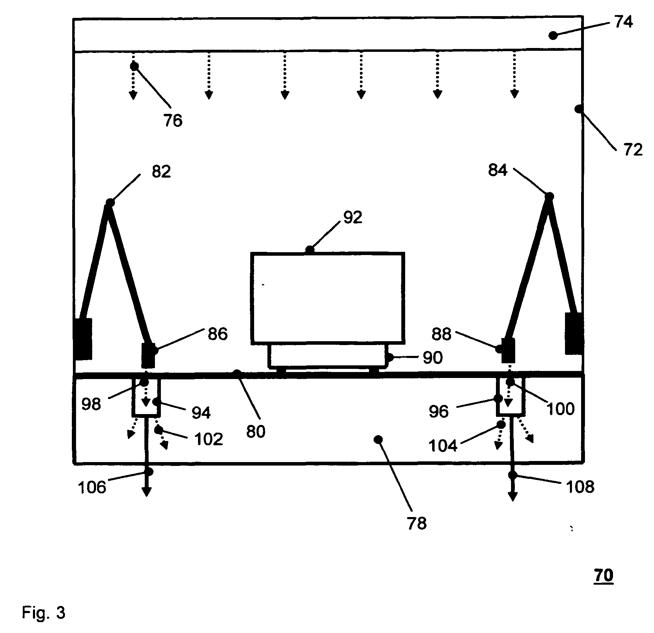

Fig. 3 zeigt eine exemplarische Lackierkabine in einer Schnittansicht 70. Zwischen gegenüber liegenden Kabinenwandungen 72 ist ein Lackierraum gebildet, welcher in seinem oberen Bereich durch eine Klimaanlage 74 abgeschlossen ist. Aus der Klimaanlage 74 wird oberhalb der gesamten Grundfläche der Lackierkabine gereinigte und klimatisierte Umluft in den Lackierraum eingebracht, wie mit den Pfeilen 76 angedeutet. Die Luft 76 senkt sich nach unten und nimmt dabei Lacknebel auf, welcher beispielsweise beim Lackieren eines Werkstückes entsteht. Die so verunreinigte Kabinenluft strömt durch den Kabinenboden 80, welcher üblicherweise als Stahlträgerkonstruktion gefertigt ist, in welche Gitterroste eingefügt sind, in eine Trockenabscheidung 78, welche sich unterhalb des Kabinenbodens 80 befindet. Dort wird die Kabinenumluft gereinigt, wobei insbesondere die darin enthaltenen Lackpartikel abgeschieden werden, und die gereinigte Umluft wird wieder der Klimaanlage 74 zugeführt, welche die Luft dann wieder in den Lackierbereich bläst.

In der Lackierkabine befinden sich Lackierroboter 82, 86, an deren Armspitzen jeweilige Lackiervorrichtungen beziehungsweise Zerstäuber 86, 88 angeordnet sind. Die Lackierroboter sind in diesem Fall als auf einer Verfahrachse angeordnet anzunehmen, so dass Zerstäuber mit insgesamt 7 Bewegungsfreiheitsgraden in der Lackierkabine bewegt werden können, insbesondere auch um ein zu lackierendes Werkstück, welches in dieser Figur schematisch mit der Bezugsziffer 92 angedeutet ist. Das Werkstück 92 ist beispielsweise als eine Automobilkarosserie anzunehmen, welche auf einem Werkstückträger 90 befindlich ist, welcher seinerseits von einem nicht gezeigten Bodenfördersystem längs der Lackierkabine bewegbar ist.

In den Boden 80 der Lackierkabine eingelassen sind zwei erfindungsgemäße Lacknebeltrennvorrichtungen 94, 96, in welche die Zerstäuber 86, 88 im Falle eines jeweiligen Farbwechsels gerichtet sind. Der während des Farbwechselvorgangs entstehende Lacknebel ist mit Pfeilen mit den Bezugsziffern 98, 100 angedeutet. Ein Teil der in dem Lacknebel 98, 100 enthaltenen Lackpartikel wird in den Lacknebeltrennvorrichtungen 94, 96 als Flüssigkeit abgeschieden und über eine jeweilige Ableitung einem nicht gezeigten Sammelbehälter zugeführt, wie mit den Pfeilen mit der Bezugsnummern 106, 108 angedeutet. Der um die jeweiligen Lackpartikel reduzierte Lacknebel 102, 104 weist keine größeren Lackpartikel oder Lacktropfen mehr auf und wird in die Trockenabscheidung 78 eingeleitet. Aufgrund der nunmehr sicher rausgefilterten größeren Lacktropfen lässt sich der reduzierte Lacknebel 102, 104 problemlos durch die Trockenabscheidung 78 reinigen.

### Bezugszeichenliste

- 10: exemplarische erste Lacknebeltrennvorrichtung
- 12: konisches Rohr
- 14: rohrähnlich verlängerte Form des Sammeltrichters
- 16: Sammeltrichter
- 18: Trichterhals
- 20: Sammelhaube
- 22: zylinderähnliche Wandung
- 24: Zerstäuber
- 26: Zerstäuberglocke
- 28: Drehachse
- 30: erster Lacknebelstrom
- 32: zweiter Lacknebelstrom
- 34: dritter Lacknebelstrom
- 36: Flüssigkeit
- 38: Neigungswinkel
- 40: ringartiges Verengungselement
- 42: Austrittsspalt
- 50: exemplarische zweite Lacknebeltrennvorrichtung
- 52: Drehachse
- 54: kleinere Seite von konischem Rohr
- 56: größere Seite von konischem Rohr
- 58: Sammeltrichter
- 60: zylinderähnliche Wandung
- 62: Durchlassspalt
- 64: Sammelhaube
- 70: exemplarische Lackierkabine
- 72: Kabinenwandung
- 74: Klimaanlage
- 76: Luftströmung
- 78: Trockenabscheidung
- 80: Kabinenboden
- 82: erster Lackierroboter
- 84: zweiter Lackierroboter
- 86: erste Lackiervorrichtung
- 88: zweite Lackiervorrichtung
- 90: Werkstückträger
- 92: Werkstück
- 94: erste Lacknebeltrennvorrichtung
- 96: zweite Lacknebeltrennvorrichtung
- 98: Lacknebel von erster Lackiervorrichtung
- 100: Lacknebel von zweiter Lackiervorrichtung
- 102: reduzierter Lacknebel von erster Lackiervorrichtung
- 104: reduzierter Lacknebel von zweiter Lackiervorrichtung
- 106: abgeschiedener Lack von erster Lackiervorrichtung
- 108: abgeschiedener Lack von zweiter Lackiervorrichtung

## Patentansprüche

1. Lacknebeltrennvorrichtung (10, 94, 96), umfassend
• ein konisches Rohr (12),
• einen Sammeltrichter (16, 58) mit Trichtereinlass und Trichterhals (18), in welchen *Sammeltrichter* das konische Rohr (12) mit seiner größeren Seite (56) hineinragt, wobei der Trichterhals (18) dafür vorgesehen ist, mit einem Sammelbehälter für Lack verbunden zu werden, **gekennzeichnet durch**
• eine Sammelhaube (20), welche gegenüber dem Trichtereinlass angeordnet ist, und welche eine Lacknebeleinlassöffnung aufweist, in welche das konische Rohr (12) mit seiner kleineren (54) Seite mündet,
• wobei zwischen Einlassöffnung des Sammeltrichters (16, 58) und Sammelhaube (20) ein Austrittsspalt (42) vorgesehen ist.

2. Lacknebeltrennvorrichtung nach Anspruch 1, **dadurch gekennzeichnet, dass** der Sammetrichter (16, 58) an seinem einlaßseitigen Ende eine rohrähnlich verlängerte Form (14) aufweist.

3. Lacknebeltrennvorrichtung nach einem der Ansprüche 1 oder 2, **dadurch gekennzeichnet, dass** der Sammeltrichter (16, 58) längs seiner axialen (28) Erstreckung von einer zylinderähnlichen Wandung (22, 60) umgeben ist, welche an ihrem einem Ende mit der Schutzhaube (20) verbunden ist, wobei in radialer Richtung zwischen Trichtereinlass und zylinderähnlicher Wandung (22, 60) ein Durchlassspalt (62) gebildet ist.

4. Lacknebeltrennvorrichtung nach einem der vorherigen Ansprüche, **dadurch gekennzeichnet, dass** über der Einlassöffnung ein ringähnliches Verengungselement (40) angeordnet ist.

5. Lacknebeltrennvorrichtung nach einem der vorherigen Ansprüche, **dadurch gekennzeichnet, dass** der Neigungswinkel (38) des konischen Rohres (12) im Bereich von 10° bis 50° liegt.

6. Lacknebeltrennvorrichtung nach einem der vorherigen Ansprüche, **dadurch gekennzeichnet, dass** diese zumindest teilweise aus Edelstahl gefertigt ist.

7. Lackierkabine (70), umfassend wenigstens eine Lackiervorrichtung (24, 86, 88) und eine Trockenabscheidung (78), **dadurch gekennzeichnet.**
**dass** diese weiterhin wenigstens eine Lacknebeltrennvorrichtung (10, 94, 96) nach einem der Ansprüche 1 bis 6 umfasst.

8. Lackierkabine nach Anspruch 7, **dadurch gekennzeichnet, dass** ein Lackierroboter (82, 84) dafür vorgesehen ist, die wenigstens eine Lackiervorrichtung (24, 86, 88) zu tragen.

## Claims

1. Paint mist separating device (10, 94, 96) comprising
• a tapered tube (12),
• a collecting funnel (16, 58) with a funnel inlet and a funnel neck (18), into which collecting funnel the larger end (56) of the tapered tube (12) projects, wherein the funnel neck (18) is provided for connection to a collecting tank for paint, **characterized by**
• a collecting hood (20), which is arranged opposite the funnel inlet and which has a paint mist inlet opening, into which the smaller end (54) of the tapered tube (12) opens,
• wherein an outlet gap (42) is provided between the inlet opening of the collecting funnel (16, 58) and the collecting hood (20).

2. Paint mist separating device according to Claim 1, **characterized in that** the collecting funnel (16, 58) has a shape (14) extended in the manner of a tube at the inlet end thereof.

3. Paint mist separating device according to either of Claims 1 or 2, **characterized in that** the collecting funnel (16, 58) is surrounded along the axial (28) extent thereof by a cylinder-like wall (22, 60) which is connected at one end to the protective hood (20), wherein a through-flow gap (62) is formed in the radial direction between the funnel inlet and the cylinder-like wall (22, 60).

4. Paint mist separating device according to one of the preceding claims, **characterized in that** a ring-like restriction element (40) is arranged over the inlet opening.

5. Paint mist separating device according to one of the preceding claims, **characterized in that** the angle of taper (38) of the tapered tube (12) is in a range of from 10° to 50°.

6. Paint mist separating device according to one of the preceding claims, **characterized in that** said device is manufactured at least partially from stainless steel.

7. Paint booth (70) comprising at least one painting device (24, 86, 88) and a dry separation system (78), **characterized**
**in that** said separation system furthermore comprises at least one paint mist separating device (10, 94, 96) according to one of Claims 1 to 6.

8. Paint booth according to Claim 7, **characterized in that** a painting robot (82, 84) is provided for carrying the at least one painting device (24, 86, 88).

## Revendications

1. Dispositif de séparation de brouillard de peinture (10, 94, 96), comprenant :
- un tube conique (12),
- un entonnoir collecteur (16, 58) avec une entrée d'entonnoir et un col d'entonnoir (18), dans lequel entonnoir collecteur pénètre le tube conique (12) avec son plus grand côté (56), le col d'entonnoir (18) étant prévu pour être connecté à un récipient collecteur de peinture,
**caractérisé par**
- une hotte collectrice (20) qui est disposée en regard de l'entrée d'entonnoir et qui présente une ouverture d'entrée de brouillard de peinture dans laquelle débouche le tube conique (12) avec son plus petit côté (54),
- un interstice de sortie (42) étant prévu entre l'ouverture d'entrée de l'entonnoir collecteur (16, 58) et la hotte collectrice (20).

2. Dispositif de séparation de brouillard de peinture selon la revendication 1, **caractérisé en ce que** l'entonnoir collecteur (16, 58) présente, au niveau de son extrémité du côté de l'entrée, une forme prolongée similaire à un tube (14).

3. Dispositif de séparation de brouillard de peinture selon l'une quelconque des revendications 1 ou 2, **caractérisé en ce que** l'entonnoir collecteur (16, 58) est entouré le long de son étendue axiale (28) par une paroi similaire à un cylindre (22, 60) qui est connectée à l'une de ses extrémités à la hotte de protection (20), un interstice de passage (62) étant formé dans la direction radiale entre l'entrée d'entonnoir et la paroi similaire à un cylindre (22, 60).

4. Dispositif de séparation de brouillard de peinture selon l'une quelconque des revendications précédentes, **caractérisé en ce qu'**un élément de rétrécissement similaire à une bague (40) est disposé par-dessus l'ouverture d'entrée.

5. Dispositif de séparation de brouillard de peinture selon l'une quelconque des revendications précédentes, **caractérisé en ce que** l'angle d'inclinaison (38) du tube conique (12) est situé dans une plage de 10° à 50°.

6. Dispositif de séparation de brouillard de peinture selon l'une quelconque des revendications précédentes, **caractérisé en ce que** celui-ci est fabriqué au moins en partie en acier spécial.

7. Cabine de peinture (70) comprenant au moins un dispositif de peinture (24, 86, 88) et un système de séparation à sec (78), **caractérisée en ce que** celle-ci comprend en outre au moins un dispositif de séparation de brouillard de peinture (10, 94, 96) selon l'une quelconque des revendications 1 à 6.

8. Cabine de peinture selon la revendication 7, **caractérisée en ce qu'**il est prévu un robot de peinture (82, 84) pour celle-ci, afin de porter l'au moins un dispositif de peinture (24, 86, 88).
